# EUROPEAN PATENT APPLICATION

(11) **EP 1 378 341 A2**
(43) Date of publication of application: **07.01.2004**
(21) Application number: 03253875.3
(22) Date of filing: 19.06.2003
(51) Int. Cl.: B29D 11/00

(54) **Method of producing a deep microrelief optical element**

(30) Priority: 19.06.2002 GB 0214032
(71) Applicant: CSEM Centre Suisse d'Electronique et de Microtechnique SA, 2007 Neuchâtel (CH)
(72) Inventor: Gale, Michael Thomas, 8907 Wettwsil (CH); Söchtig, Juergen, 8152 Glattbrugg (CH); Schwank, Mike, 8038 Zürich (CH); Bosshard, Christian, 4415 Lausen (CH); Klehr, Hannes, 6055 Alpnach Dorf (CH)
(74) Representative: Andrews, Arthur Stanley

(57) **Abstract**

A method for replication (recombination by applying the replication in step and repeat mode) of three-dimensional microstructures with high accuracy and high replication predictability is described. The method uses UV-curable materials or thermoplastic polymers to replicate a single element on an arbitrarily curved surface. The high replication predictability is achieved by using a multistep process. A coarse replication is made in a first step. In subsequent steps replications with high accuracy can be made by using the first coarse replica as a raw preform. The method is suited for the replication of macroscopic structures in three dimensions (from micrometer to some mm or more in relief height) which cannot be achieved by the usual, well known replication technologies for quasi two-dimensional microstructures.

## Description

The invention relates to a method of producing a deep microrelief element, to a method of forming a plurality of deep micro relief elements on a substrate, and to a method of producing a mould tool.

The invention may be applied to the direct fabrication or mould tool fabrication of replicated microstructures as well as for recombined, large three dimensional replicated structures with high surface accuracy requirements. Possible applications are in optical systems such as for telecommunications, sensors, illumination systems, and transmissive and reflective optical elements and systems (e.g. retroreflectors).

Replication and recombination technology for optical microstructures is widely used to fabricate low-cost (micro-)optical systems, for example as described in M.T. Gale, Replication, Ch. 6 in: Micro-Optics: Elements, systems and applications, H.P. Herzig, Ed., Taylor and Francis, London, 1997, ISBN 0 7484 0481 3 HB. Functional structures, produced for example by photolithography, holography or micromachining are copied by electroforming and recombined by step-and-repeat hot embossing on a large surface. This structure is used as the master for the large scale manufacturing of the final product by replication technologies such as hot embossing, UV-casting or injection moulding. The electroformed copies are typically thin nickel foils and the step-and-repeat hot embossing is typically in an acrylic for example polymethylmethacrylate (PMMA) substrate or film.

One application for example are holographic foils used as security markers on credit cards, ID-cards and others.
The hologram is produced in large quantities by roll-embossing of large foils. The embossing matrix itself is made by the electroforming from a plastic master, which is produced by the step-and-repeat process from a single hologram master.

Those micro-optical structures usually have an overall height of some nanometers up to roughly 10µm. The accuracy of the replication is limited mainly by material shrinkage of 1 % to 10 % of the overall relief height, making the process inaccurate and unsuitable for larger relief heights.

The standard method for the fabrication of three-dimensional, large scale macroscopic element arrays is based on the manufacturing of many masters and assembling them together. This technique is well established, and has (for example in the case of retroreflectors) a long history documented also in patents, see for example US-A-1591572.

For retroreflectors, pins, usually of steel, have one end cut and polished to the retroreflector geometry. Many (up to some hundred) of those pins are assembled into large arrays with the overall geometry required. This matrix is electroformed to build a tool for injection moulding a polymer such as polycarbonate. Different means for fabricating curved reflectors (e.g. spacing wedges between the pins) or the combination of retroreflectors with lenses (separators) are used and are also disclosed, for example in WO-A-9501249, EP-A-1033220 and US-A-5657169. The angularity of retroreflectors, i.e. the maximum illumination angle under which the light is efficiently reflected back to the source can be extended by tilting the axis of a portion of the retroreflector elements.

If a single master is expensive or if its fabrication is slow, the technology of recombining this master into large arrays becomes very costly and time consuming. Therefore, a process in which one single master element is replicated many times can reduce manufacturing cost and time as well as increase flexibility.

The invention provides a method of producing a deep microrelief element comprising the steps of;
producing a first coarse element on a substrate, and subsequently processing the coarse element to produce a more accurately defined element.

The coarse element may be produced by hot embossing.

The subsequent processing may comprise the steps of;
a) adding further material into or onto the coarse element, and
b) moulding or curing the further material to produce a more accurately defined element.

The method may comprise the steps of;
a) at least partially filling a recess in a preformed substrate with a UV-curable material,
b) positioning a stamper in a first position in the filled recess,
c) curing the UV-curable material with the stamper in position,
d) withdrawing the stamper,
e) adding further UV-curable material,
f) positioning the stamper in a second position in the recess, the second position being separated from the first position by a distance that is less than the thickness of the UV-curable material cured in step c),
g) curing the further UV-curable material, and
h) withdrawing the stamper.

When the substrate has a plurality of recesses, steps a) to h) may be repeated for each recess. The filling of surrounding recesses with UV curable material may be prevented during the formation of one element.

The present invention creates a new multi-step process for the replication and recombination of three-dimensional elements. Some embodiments enable the production of three dimensional elements having with lateral dimensions of some millimetres, relief height in the range of micrometers to several millimetres and a replication accuracy of better than 3µm in all dimensions. This process can be used for the replication and recombination of one or many, same or different, single elements into a more complex system. It compensates for the effect of material shrinkage to enable dimensional tolerances in the micrometer or even submicrometer range to be obtained. This process is suitable for producing a tool for use in injection moulding and/or hot embossing.

The process can be carried out manually or may be automated using a multi-axis robot system to handle the elements. An example of a suitable robot is that presently available from Sysmelec SA as the Autoplace 411.

The invention further provides a method of forming a substrate carrying a plurality of deep microrelief elements comprising the steps of;
a) providing a substrate
b) forming a first coarse representation of an element,
c) further processing the coarse representation of the element to provide a more accurately defined element, and
d) repeating steps b) and c) for a further element until the plurality of elements has been formed.

Step b) may be performed by;
e) providing a substrate having a corresponding plurality of recesses each being larger than the final cavities,
f) at least partially filling one of the recesses with a UV curable material,
g) inserting a stamper into the recess of step f),
h) curing the UV-curable material to form a first cavity, and
i) removing the stamper.

Step c) may be performed by;
j) at least partially filling a further recess,
k) producing relative movement between the substrate and the stamper so that the stamper is aligned with the further recess,
1) inserting the stamper into the further recess,
m) curing the UV-curable material to form a further cavity, and
n) removing the stamper.

The invention still further relates to a method of producing a mould tool comprising the steps of;
a) producing a substrate having deep microrelief elements by a method according to any preceding claim, and
b) producing the tool by electroforming using the substrate obtained in step a).

A method for replication (recombination by applying the replication in step and repeat mode) of three-dimensional microstructures with high accuracy and high replication predictability is described. The method uses UV-curable materials or thermoplastic polymers to replicate a single element on an arbitrarily curved surface. The high replication predictability is achieved by using a multi-step process. A coarse replication is made in a first step. In subsequent steps replications with high accuracy can be made by using the first coarse replica as a raw preform. The method is suited for the replication of macroscopic structures in three dimensions (from micrometer to some mm or more in relief height) which cannot be achieved by the usual, well known replication technologies for quasi two-dimensional microstructures.

The above and other features and advantages of the invention will be apparent from the following description, by way of example of an embodiment of the invention with reference to the accompanying drawings, in which:
Figure 1 shows in schematic form the steps taken in one embodiment of a method according to the invention,
Figure 2 illustrates schematically a robot for carrying out the method of Figure 1, and
Figure 3 is a flow chart representing the program executed by the robot in carrying out the method of Figure 1.

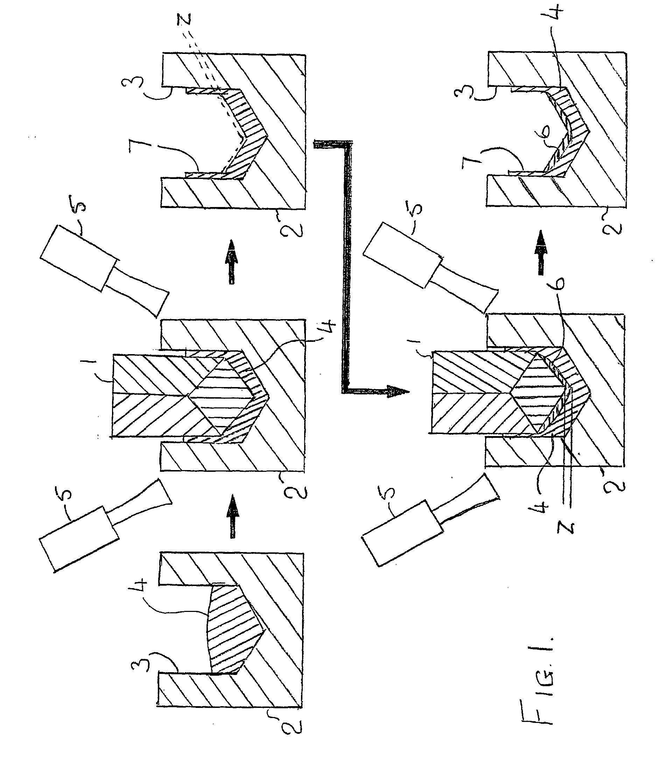

One embodiment of a method of producing deep microrelief elements on a substrate is illustrated in Figure 1.
■ A three dimensional structure (e.g. a steel retroreflector pin), herein after referred to as a stamper 1, is mounted onto a robot having a positioning accuracy and reproducibility better than or equal to the accuracy requirements for the replication structure. A suitable robot is that produced by Sysmelec SA as the Autoplace 411.
■ A substrate 2 with a coarse preform 3 (drilled hole in a UV transparent material) at each position where a replicated element is required is placed such that the robot can locate the stamper 1 above the coarse preform 3.
■ A UV-curable material 4 (for example Norland NOA 61 or ORMOCER B59, developed by Fraunhoferinstitut in Freiburg, D) is dispensed into a coarse preform hole 3.
■ The stamper 1 is positioned by the robot in the UV-curable material 4 within the preform 3 with all functional faces in contact with the uncurable material 4.
■ The curing UV-light produced by two UV-light sources 5 is turned on to pre-cure the W-sensitive material 4 in contact with the stamper 1.
■ The UV-curing is continued until the replicated preform is hard and shrinkage has come to an end.
■ A second replication step is then performed in which, the same or a different UV-curable material 6 is dispensed to the replicated preform.. This can be done with a dispenser or for example by dipping the stamper 1 gently into a reservoir filled with the UV-curable material.
■ In the second replication step, the stamper 1 is positioned in the preform 7 prepared by the first replication in such a way, that a small gap Z of several micrometer in height, filled with the UV-curable material 6 is formed between the first replica 7 and the stamper 1. As the second UV-cured layer has only a small thickness, the absolute shrinkage will be reduced. This leads to an increased accuracy.
■ The stamper 1 is removed.
■ The whole process is repeated with the next preform hole until an array of the required dimensions has been fabricated.

For the application of this array of replicated structures as a mould tool, the master, manufactured by the process according to this invention, can then be converted into a tool by electroforming. As one application, an array of retroreflectors can be fabricated from a single master pin. With subsequent electroforming, a mould tool for plastic retroreflectors can be obtained. As another application this process can be used to directly manufacture arrays of identical optical elements (such as lenses, mirrors, prisms, gratings and diffractive optical elements) on large scales or manufacture tools for repeated fabrication of such elements.

The stamper is typically made of a material used in conventional microoptical manufacturing. Such material include plastics, epoxy, galvanically deposited materials like Ni and Ni-alloys, steel, brass, aluminium and other directly machined metals, structured semiconductors like silicon, quartz and other optical glasses.

In one form of this invention, the preform is made of a UV-transparent material. This can be an acrylic such as PMMA. Other suitable materials include UV-transparent glasses such as fused silica.

Further exemplary embodiments of this invention include:
■ In one embodiment of this invention, the stamper 1 is made of a UV-transparent material and the UV-light is applied through the stamper to cure the material.
   The substrate can in this case be an opaque material. Examples of such materials include polyethylene or PVC, metals such as Brass, aluminium or steel, or glass.
■ The process can be extended to more than two replication steps.
■ The first replication step can also be performed by hot embossing using a preform substrate of a thermoplastic material.
■ For the protection of the surrounding holes in the array from undesired filling with the UV-curable material, a hard or flexible plug may be used to seal the hole.
■ The process can be used on arbitrary curved substrate surfaces. In this case the robot has to adjust to the local curvature and the desired embossing angle.
■ To increase the angularity of retroreflecting arrays made by this method, the embossing angle or the substrate orientation may be adjusted.
■ For the fabrication of optical elements, the process may be used for a combination of optical elements with postprocessing treatment such as anti-reflective coating, filter deposition, blackening, masking with apertures, and addition of mechanical alignment or mounting structures.
■ The process may also be used for the replication and combination of different or identical optical elements together with mechanical alignment or mounting structures on the same substrate for precise assembly of optical systems.
■ A combination of optical elements and mechanical components may be combined with post processing treatment.

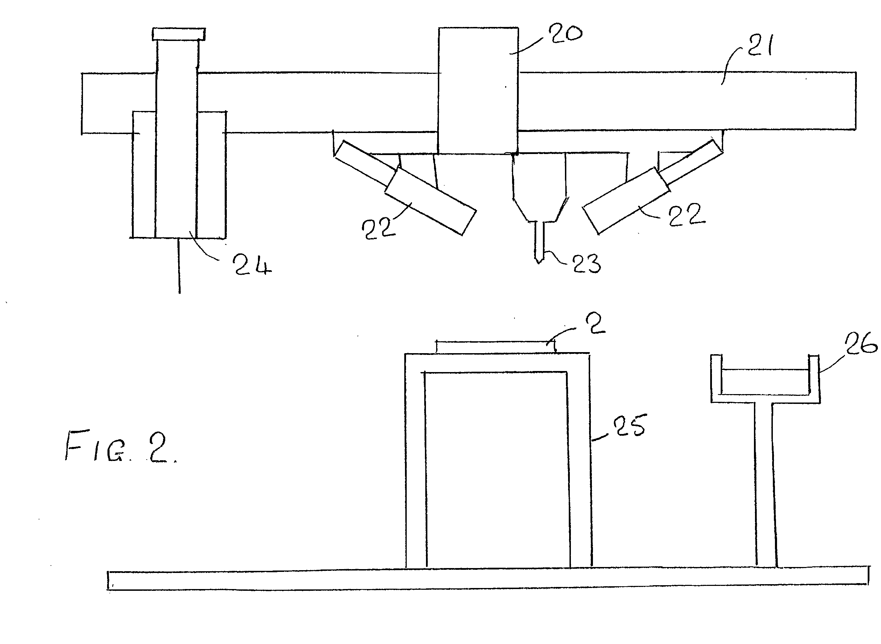

As shown in Figure 2 a robot for carrying out the method illustrated in Figure 1comprises a camera 20 mounted on a movable member 21 which can be accurately positioned on x, y, and z axes. The member also carried UV illumination sources 22, a stamper 23, and a dispenser 24 for dispensing UV curable material into the preforms 3 (Figure 1) on the substrate 2.

A table 25 carries the substrate 2 and a container 26 is provided for the UV curable material used in the second stage of the method.

The method may be applied to the production of a master for producing a mould tool for the production of retroreflector arrays, for example for rear light clusters on motor cars.

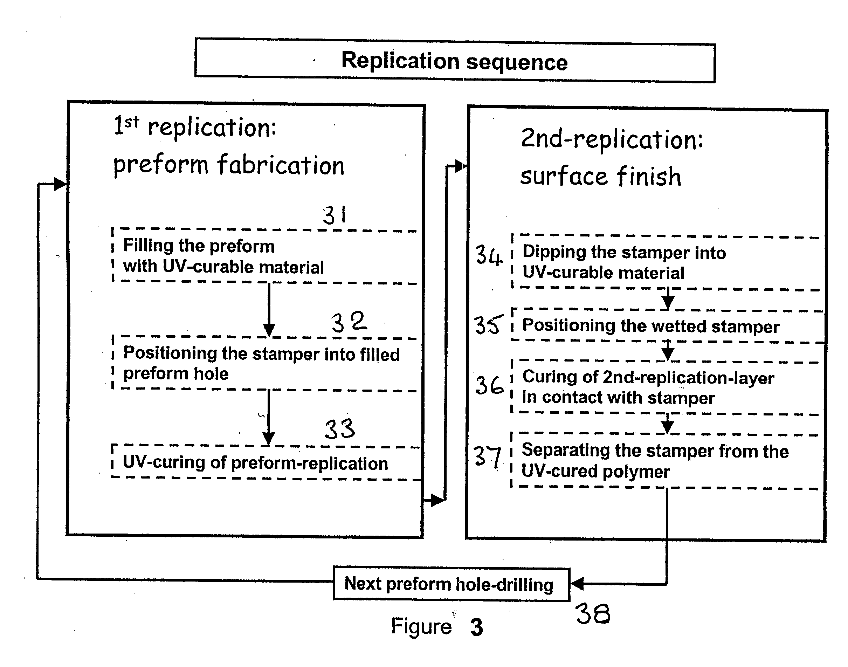

The robot carries out the steps illustrated in Figure 3 which is a flow chart of the process steps for producing the master array which can then be used for replication by known methods.

The first step 31 of the method is to fill the preform with a UV curable material. The second step 32 is to position the stamper 23 into the preform. The third step 33 is to cure the UV curable material in the preform to provide a coarse element. This completes the first replication stage and provides a preform fabrication.

On completion of the first stage the method continues with step 34, which is to dip the stamper 23 into the UV curable material in the container 26. This may be the same as or a different material from that used in step 31.
The next step 35 is to position the wetted stamper 23 into the preform. The stamper 23 is positioned such that the gap between the preform and the stamper is filled with the curable material picked up from the container 26 and such that the gap between the surface of the stamper and the coarse element is less than the thickness of the UV material cured in step 33. Step 36 is the curing of the additional UV curable material and step 37 is the separation of the stamper from the cured material. This provides an accurately defined element where the effects of shrinkage of the layer of material cured in step 33 is compensated for by adding a small quantity of additional material, any further shrinkage of the further material will be small as the quantity of added material is small. This completes the second replication stage and provides an accurately finished element.

Step 38 is to move the process to the next preform at which time step 31 is reperformed on a further preform with the process repeating until all the elements have been formed.

This method treats each preform sequentially to produce a master having an array of elements. It would also be possible to produce an array of elements using a corresponding array of stampers requiring only a single pass through the steps of 31 to 37. Clearly an intermediate number of stampers would require multiple passes but a lesser number than if a single stamper is used.

If even greater accuracy in the finishing of the elements is required the second stage may be further repeated with smaller amounts of added material at each further repetition.

The method may be used to produce a retroreflector array of for example 100x100 elements using the following features:
Stamper (master structure) 1:
   single pin with three quadratic surfaces at the end and which are mutually perpendicular to each other.
Substrate material 2: PMMA
   IV-curable material 4: ORMOCER B59 which is a specific type of an organically modified ceramic (developed by the Fraunhofer Institut Würzburg - Institut fur Silicatforschung). An example of an alternative material is NOA 61 from the Norland Company, US.

Process sequence as shown in Figure 3 and described above using two-step replication with UV-casting.

## Claims

1. A method of producing a deep microrelief element comprising the steps of;
producing a first coarse element on a substrate, and subsequently processing the coarse element to produce a more accurately defined element.

2. A method of producing a deep microrelief element as claimed in Claim 1 in which the coarse element is produced by hot embossing.

3. A method as claimed in Claim 1 or Claim 2 in which the subsequent processing comprises the steps of;
a) adding further material into or onto the coarse element, and
b) moulding or curing the further material to produce a more accurately defined element.

4. A method of producing a deep microrelief element as claimed in Claim 1 comprising the steps of;
a) at least partially filling a recess in a preformed substrate with a UV-curable material,
b) positioning a stamper in a first position in the filled recess,
c) curing the UV-curable material with the stamper in position,
d) withdrawing the stamper,
e) adding further UV-curable material,
f) positioning the stamper in a second position in the recess, the second position being separated from the first position by a distance that is less than the thickness of the UV- curable material cured in step c),
g) curing the further UV-curable material, and
h) withdrawing the stamper.

5. A method as claimed in Claim 4 in which the substrate has a plurality of recesses and steps a) to h) are repeated for each recess.

6. A method as claimed in Claim 5 comprising the further step of preventing the surrounding recesses from being filled with UV-curable material.

7. A method as claimed in any of Claims 4 to 6 in which the further UV-curable material is added by dipping the stamper in the UV-curable material before positioning it in the recess.

8. A method as claimed in any of Claims 4 to 7 in which the substrate is UV transparent.

9. A method as claimed in any of Claims 4 to 8 in which the stamper is UV transparent.

10. A method as claimed in any of Claims 4 to 9 in which after step h) steps e) to h) are repeated.

11. A method of forming a substrate carrying a plurality of deep microrelief elements comprising the steps of;
a) providing a substrate,
b) forming a first coarse representation of an element,
c) further processing the coarse representation of the element to provide a more accurately defined element, and
d) repeating steps b) and c) for a further element until the plurality of elements has been formed.

12. A method of forming a substrate carrying a plurality of deep microrelief elements as claimed in Claim 11 in which step b) is performed by;
e) providing a substrate having a corresponding plurality of recesses each being larger than the final cavities,
f) at least partially filling one of the recesses with a UV curable material,
g) inserting a stamper into the recess of step f),
h) curing the UV-curable material to form a first cavity, and
i) removing the stamper,
and in which step b) is performed by;
j) at least partially filling a further recess,
k) producing relative movement between the substrate and the stamper so that the stamper is aligned with the further recess,
1) inserting the stamper into the further recess,
m) curing the UV-curable material to form a further cavity, and
n) removing the stamper.

13. A method as claimed in any of Claims 4 to 10 and 12 in which insertion of the stamper into the recesses is controlled by a robotic machine.

14. A method of producing a mould tool comprising the steps of;
a) producing a substrate having deep microrelief elements by a method according to any preceding claim, and
b) producing the tool by electroforming using the substrate obtained in step a).
